# EUROPEAN PATENT SPECIFICATION

(11) **EP 0 737 260 B1**
(45) Date of publication and mention of the grant of the patent: **11.08.1999**
(21) Application number: 95905262.2
(22) Date of filing: 13.12.1994
(51) Int. Cl.: D21C 11/12, F22D 1/02

(54) **ECONOMIZER OF A RECOVERY BOILER**
EKONOMISER EINES RÜCKGEWINNUNGSKESSELS
ECONOMISEUR D'UNE CHAUDIERE DE RECUPERATION

(30) Priority: 29.12.1993 SE 9304310
(43) Date of publication of application: 16.10.1996
(73) Proprietor: KVAERNER PULPING AB, 651 15 Karlstad (SE)
(72) Inventor: AMBERNTSSON, Kjell, S-421 50 Västra Frölunda (SE); HJALMARSSON, Lennart, S-517 00 Bollebygd (SE); KJÖRK, Anders, S-441 41 Alings s (SE); NYMAN, Bengt, S-423 53 Torslanda (SE)
(86) International application number: SE9401197
(87) International publication number: WO9518263

(56) References cited:
- DE-C- 467 173
- DK-C- 69 139
- SE-C- 137 880

## Description

### TECHNICAL FIELD:

The present invention relates to an economizer arrangement for a recovery boiler for incinerating spent liquors which are obtained in connection with the production of cellulose, starting from wood chips or similar material which contains lignin.

### STATE OF THE ART:

Recovery boilers for incinerating spent liquors have been known for several decades. In general, they consist of a shaft-shaped hearth whose walls to a large extent consist of pipes, through which water flows, and which, in its upper part, is also provided with pipe systems through which water flows, thereby cooling the flue gases. The concentrated spent liquor, which is also termed black liquor, is sprayed into the lower part of the hearth through one or more nozzles. Air for incinerating the black liquor is blown in, at various levels, as primary air, secondary air, tertiary air and also, more recently, quaternary air.

In addition to gases such as carbon dioxide, various nitrogen oxides, carbon monoxide, sulphur compounds and water, smelt inorganic material, essentially consisting of sodium salts, is also generated during the incineration. This smelt collects at the bottom of the boiler, whence it is allowed to run out into a container and is then reused. The temperature in the incineration zone of the shaft is 1000-1200°C and the smelt which is removed has a temperature of 700-900°C. The flue gases are cooled down to 100-200 degrees before they are released from the recovery boiler. The heat which is generated and which is removed from the flue gases is transferred to the water in the pipe systems, thereby producing steam which is removed in a steam dome at the top of the boiler and then passes through a superheater in order to increase the steam temperature still further. Normally, the steam which has been generated has a pressure of 40-100 bar and a temperature of 400-500°C, depending on the construction of the boiler.

The pipe system for cooling the flue gases in the upper part of the boiler, and downstream of this, is normally suspended and arranged in several groups which succeed each other in the direction of flow of the flue gases. Soot blowers are placed between these groups for the purpose of intermittently cleaning the pipes of dust and other forms of coating. The soot blowers are telescopic and are pushed in between the pipe assemblies when they are to effect the cleaning. The flue gases flow partly across the pipes and partly along them, and the whole pipe arrangement is terminated, as a rule, by two long pipe assemblies, which are suspended consecutively and close to each other and in which the flue gases flow downwards along the pipes, initially in the first of these assemblies and then in the second. A shaft for upwardly flowing flue gas is arranged between the assemblies.

### TECHNICAL PROBLEM:

The economizer arrangement according to the known systems functions relatively well but can be improved still further (see e.g. SE-C-137 880). Thus, at the end of the cooling of the flue gases, the temperature difference between the flue gas and the cooling medium is small, for which reason a large area is required in order to achieve the desired cooling of the gases.

While it is well known that gas flow along cooling pipes gives a cooling effect per unit area which is inferior to that of flow across the pipes, under conditions which are otherwise identical, the arrangement employed, with flow along the pipes, has nevertheless been considered necessary in order to prevent dust accumulating on the pipes to such an extent, and in such a manner, that cleaning with the soot blowers is rendered difficult.

The previously known economizer arrangements have also required a large amount of space, due to the fact that the different groups have all been suspended from the same level. There has, therefore, also been a need to achieve a more compact arrangement for cooling the flue gases.

### SOLUTION:

By means of the present invention, it has been possible to solve the abovementioned problems, and an economizer arrangement for a recovery boiler for incinerating spent liquor for cellulose cooking has been achieved in which the incineration takes place in a shaft-shaped hearth, in and downstream of which the flue gases are cooled with the aid of, inter alia, a pipe system through which water flows, a so-called economizer, which is arranged with soot blowers, characterized in that the cooling in this economizer is designed in two stages, with the flue gases flowing along the pipes in the penultimate stage and flowing across the pipes in the final stage and that the penultimate stage and the final stage are arranged in a stack, with the finale stage being at a lower level than the penultimate stage.

According to the invention, it is expedient for the final stage to have an inlet which is directly connected to the outlet from the penultimate stage.

According to the invention, the final stage is expediently designed as several, preferably three or more, pipe assemblies which are arranged consecutively in the direction of flow of the flue gases.

By virtue of the fact that the flue gas is conducted across the cooling pipes in the final stage, there is a considerable improvement in the cooling per unit area and, as a consequence, a substantially smaller heating area is required in order to bring the flue gases to the desired temperature before they are released. Due to the fact that the flue gases are cooled in the penultimate stage down to a temperature at which the dust present in the gas does not have any tendency to form hard accretions, the dust which nevertheless accumulates on the horizontal pipes can easily be removed using the soot blowers located between the pipe assemblies.

According to the invention, it is also expedient for the pipes in the penultimate stage to be vertical and for the pipes in the final stage to be horizontal.

According to the invention, it is also possible to support the final stage of the economizer arrangement from below, instead of this stage, like the penultimate stage, being suspended.

### DESCRIPTION OF THE FIGURES:

The invention will be described below in more detail while referring to the attached drawings in which:
- Fig. 1: shows, in section and partly diagrammatically, a recovery boiler having an economizer arrangement according to the invention, in which
- Fig. 2: shows a section along the line A-A in Fig. 1, and in which,
- Fig. 3: shows a further section along the line B-B in Fig. 1.

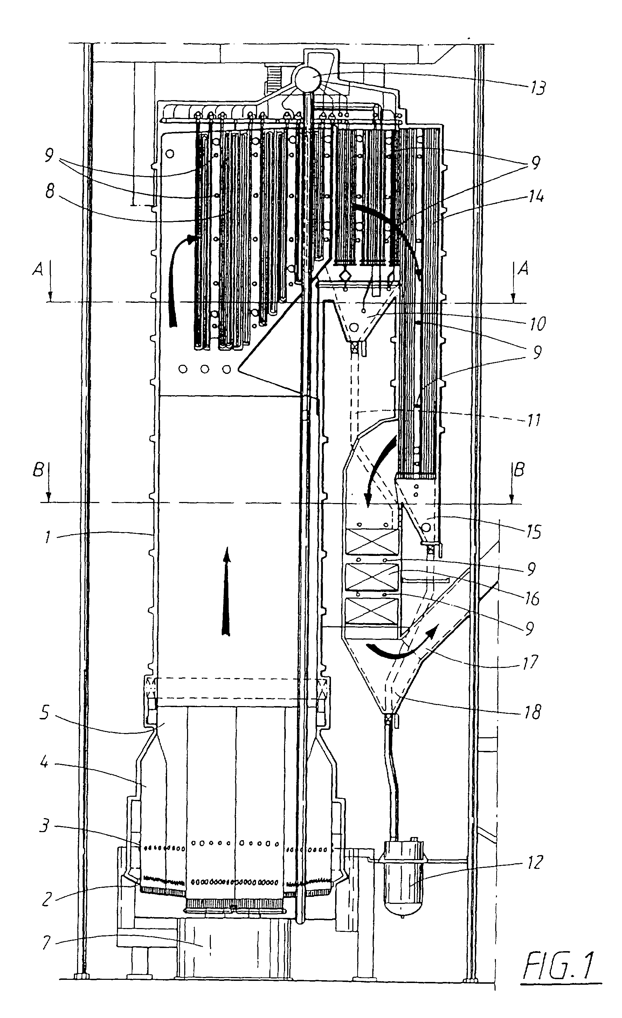

Fig. 1 shows a recovery boiler having a shaft-shaped hearth 1 which, in the present case, has an enlarged cross section at a lower level. The boiler is fed, at different levels, with primary air 2, secondary air 3, spent liquor 4, tertiary air 5 and quaternary air 6. The boiler is suspended in a frame and under the boiler there is a collecting vessel 7 for smelt inorganic substances.

The flue gases rise upwards and are first cooled in the heat exchangers 8 having soot blowers 9. Soot from the latter is collected in the funnel 10 and is conducted via a pipe 11 to a vessel 12. The flue gases then flow down through the economizer assembly 14, which is suspended in the boiler frame. There are an appropriate number of soot blowers 9 in this pipe assembly 14. Dust which is dislodged from this economizer assembly 14 falls down and is collected in a funnel 15, from which it is reintroduced into the hearth 1 via the vessel 12. The water which has passed through the economizer assembly 14 is collected in the steam dome 13.

The flue gases from the economizer 14 flow onwards into the final cooling stage 16 which, in the present case, consists of three horizontal pipe assemblies placed above each other with a given distance in between to provide space for the soot blowers 9 between the assemblies. In this final part 16, the flue gases thus flow across the water pipes, which provides a final, efficient cooling. In the present case, the temperature of the flue gases when they leave the final stage through the channels 17 is less than 200°C. Soot which is detached from the final stage 16 by the soot blowers 9 falls down into the funnel 18 for onward transport to the container 12 and return to the hearth.

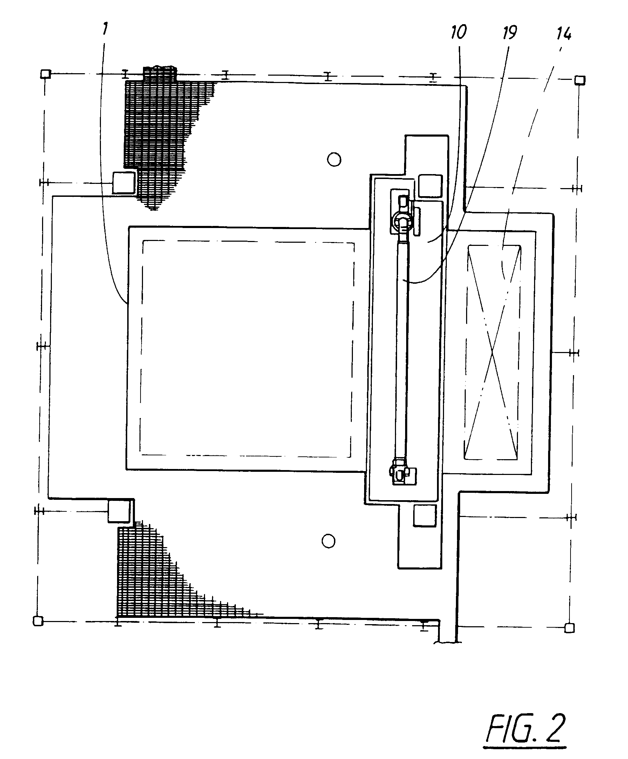

Fig. 2, which is a horizontal section along the line A-A in Fig. 1, shows the lengthwise-flowing economizer, which constitutes the penultimate stage 14, and the upper part of the hearth 1. The figure also shows a screw 19, near the bottom of the funnel 10, which conveys the fallen dust out of the funnel and down into the pipe 11.

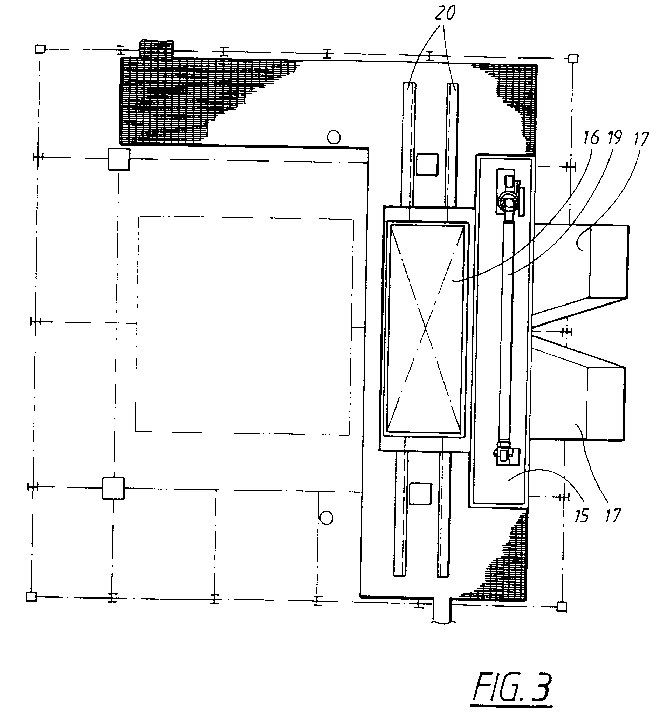

Finally, Fig. 3 shows a section along the line B-B in Fig. 1, including one of the cross-flowing pipe assemblies 16, the funnel 15 for dust from the lengthwise-flowing economizer 14 and an additional screw 19 for feeding out the dust from this funnel. The figure also shows two soot blowers 20 which are arranged above and between the pipe assemblies. These soot blowers are normally drawn out and are pushed in when they are to be used for blowing the pipes clean. The figure also shows two channels 17 through which the flue gases finally leave the plant for subsequent treatment.

By means of the present invention, an arrangement has been achieved at the end of the cooling of the flue gases which is of greater thermal efficiency. As a result, a smaller heating area can be used and space can be saved without there being any risk of an increase in blockages and accretions. The stack-shaped construction, with the final stage arranged under the penultimate stage, makes the whole arrangement narrower, which is of great practical importance. Instead of suspending the final part of the economizer, it is also possible to let it be supported on the ground, with the advantages which this entails.

The invention is not limited to the embodiment shown, but can be varied in different ways within the scope of the patent claims.

## Claims

1. Economizer arrangment for a recovery boiler for incinerating spent liquor from cellulose cooking in which the incineration takes place in a shaft-shaped hearth (1) in and downstream of which the flue gases are cooled with the aid of, inter alia, a pipe system through which water flows, a so-called economizer, which is arranged with soot blowers (19) **characterized in** that the cooling in this economizer is designed in two stages (14, 16), with the flue gases flowing along the pipes in the penultimate stage (14) and flowing across the pipes in the final stage (16), and that the penultimate stage (14) and the final stage (16) are arranged in a stack, with the final stage (16) being at a lower level than the penultimate stage (14).

2. Economizer arrangement according to Claim 1, **characterized in** that the final stage (16) has an inlet which is directly connected to the outlet from the penultimate stage (14).

3. Economizer arrangement according to Claim 1 or 2, **characterized in** that the final stage (16) is designed as several, preferably three or more, pipe assemblies which are arranged consecutively in the direction of flow of the flue gases.

4. Economizer arrangement according to any one of Claims 1-3, **characterized in** that the pipes in the penultimate stage (14) are vertical and the pipes in the final stage (16) are horizontal.

5. Economizer arrangement according to any one of Claims 1-4, **characterized in** that the final stage (14, 16) is supported from below and is consequently not suspended.

## Patentansprüche

1. Ekonomiseranordnung für einen Rückgewinnungskessel zur Verbrennung von verbrauchter Lauge aus dem Kochen von Zellulose, wobei die Verbrennung in einem schachtförmigen Herd (1) stattfindet, in dem und stromabwärts dessen Rauchgase mittels unter anderem eines Rohrsystems, durch das Wasser fließt, eines sogenannten Ekonomisers, das mit Rußblasvorrichtungen (19) angeordnet ist, gekühlt werden,
dadurch gekennzeichnet, daß die Kühlung in diesem Ekonomiser in zwei Stufen (14, 16) ausgeführt ist, wobei die Rauchgase in der vorletzten Stufe (14) entlang den Rohren und in der Endstufe (16) quer über die Rohre strömen, und daß die vorletzte Stufe (14) und die letzte Stufe (16) übereinander angeordnet sind, wobei sich die Endstufe (16) auf geringerer Höhe befindet als die vorletzte Stufe (14).

2. Ekonomiseranordnung nach Anspruch 1, dadurch gekennzeichnet, daß die letzte Stufe (16) einen Einlaß aufweist, der mit dem Auslaß von der vorletzten Stufe (14) direkt verbunden ist.

3. Ekonomiseranordnung nach Anspruch 1 oder 2, dadurch gekennzeichnet, daß die letzte Stufe (16) als mehrere, vorzugsweise drei oder mehr, Rohranordnungen ausgeführt ist, die in Strömungsrichtung der Rauchgase aufeinanderfolgend angeordnet sind.

4. Ekonomiseranordnung nach einem der Ansprüche 1 - 3, dadurch gekennzeichnet, daß die Rohre in der vorletzten Stufe (14) vertikal und die Rohre in der letzten Stufe (16) horizontal sind.

5. Ekonomiseranordnung nach einem der Ansprüche 1 - 4, dadurch gekennzeichnet, daß die Endstufe (14, 16) von unten gestützt wird und folglich nicht aufgehängt ist.

## Revendications

1. Dispositif économiseur pour une chaudière de récupération pour l'incinération de la liqueur usée provenant de la cuisson de la cellulose, dans lequel l'incinération a lieu dans un foyer en forme de cheminée (1) dans lequel, et en aval duquel les gaz d'échappement sont refroidis à l'aide, entre autres, d'un système de tuyaux à travers lequel s'écoule de l'eau, ce qu'on appelle un économiseur, qui est pourvu de soufflantes à suies (19), caractérisé en ce que le refroidissement dans cet économiseur est conçu en deux étages (14, 16), les gaz d'échappement s'écoulant le long des tuyaux dans l'avant-dernier étage (14) et s'écoulant au travers des tuyaux dans l'étage final (16), et en ce que l'avant-dernier étage (14) et l'étage final (16) sont disposés en pile, l'étage final (16) étant à un niveau inférieur à l'avant-dernier étage (14).

2. Dispositif économiseur selon la revendication 1, caractérisé en ce que l'étage final (16) a une entrée directement connectée à la sortie de l'avant-dernier étage (14).

3. Dispositif économiseur selon la revendication 1 ou 2, caractérisé en ce que l'étage final (16) est conçu en tant que plusieurs, de préférence trois ou plus, ensembles de tuyaux qui sont arrangés consécutivement dans la direction de l'écoulement des gaz d'échappement.

4. Dispositif économiseur selon l'une quelconque des revendications 1 à 3, caractérisé en ce que les tuyaux dans l'avant-dernier étage (14) sont verticaux et les tuyaux dans l'étage final (16) sont horizontaux.

5. Dispositif économiseur selon l'une quelconque des revendications 1 à 4, caractérisé en ce que l'étage final (14, 16) est supporté par en dessous et n'est donc pas suspendu.
